# EUROPÄISCHE PATENTSCHRIFT

(11) **EP 1 496 327 B1**
(45) Veröffentlichungstag und Bekanntmachung des Hinweises auf die Patenterteilung: **07.08.2013**
(21) Anmeldenummer: 04012987.6
(22) Anmeldetag: 02.06.2004
(51) Int. Cl.: F28D 7/10

(54) **Wärmetauscher**
Heat exchanger
Echangeur de chaleur

(30) Priorität: 11.07.2003 DE 10332046
(43) Veröffentlichungstag der Anmeldung: 12.01.2005
(73) Patentinhaber: Bayerische Motoren Werke Aktiengesellschaft, 80809 München (DE)
(72) Erfinder: Freymann, Raymond, Prof. Dr.-Ing., 80935 München (DE); Obieglo, Andreas, Dr., 81925 München (DE); Preis, Michael, 86343 Königsbrunn (DE); Hoetger, Michael, 13503 Berlin (DE); Haas, Tobias, 13505 Berlin (DE); Freitag, Gunnar, 10318 Berlin (DE)

(56) Entgegenhaltungen:
- DE-A1- 3 028 955
- DE-A1- 3 821 138
- DE-A1- 4 141 051
- US-A- 2 316 273

## Beschreibung

Die Erfindung betrifft einen Wärmetauschersystem.

Sie geht von der deutschen Offenlegungsschrift DE 41 41 051 A1 aus. In dieser wird eine Vorrichtung vorgeschlagen, mit der es möglich ist, die in dem Abgas einer Brennkraftmaschine enthaltene Wärmeenergie zusätzlich zu der von der Brennkraftmaschine erzeugten Leistung zum Antrieb eines Fahrzeuges zu verwenden. Hierfür weist die Brennkraftmaschine einen Arbeitsmittelkreislauf auf, der die Abgaswärmeenergie zur Unterstützung der Brennkraftmaschine in mechanische Energie umwandelt. Der Arbeitsmittelkreislauf besteht im wesentlichen aus einem um den Abgasstrang gewickelten Rohr, das von dem Arbeitsmittel durchströmt wird und einen Teil der Wärmeenergie des Abgases aufnimmt. Durch die Energieaufnahme verdampft das Arbeitsmittel und wird durch den Dampfdruck durch ein weiteres Rohrstück zu einer Turbine gefördert. Der Dampf treibt die Turbine an, wobei der Dampf entspannt und auskondensiert wird und in flüssiger Form wieder in das um den Abgasstrang gewickelte Rohr zurückgefördert wird. Die Abtriebswelle der Turbine ist mit der Abtriebswelle der Brennkraftmaschine über eine Kupplung verbunden, damit die aus dem Dampf gewonnene mechanische Energie zum Antrieb des Fahrzeuges genutzt werden kann. Damit die Wärmeverluste des Arbeitsmittelkreislaufes im Bereich des Abgasstranges verringert sind, sind die das Arbeitsmittel leitenden Rohre, sowie der Abgasstrang selbst von einem Hüllrohr umhüllt.

Das Dokument DE-A-41 41 051 wird als nächstliegender Stand der Technik angesehen. Dieses Dokument offenbart einen Wärmetauscher für eine Wärmekraftmaschine bestehend aus einem Heißrohr, von dem ein Abschnitt von einem Rohr umwickelt ist und einem Hüllrohr, das den Abschnitt umhüllt und mit diesem einen Hohlraum bildet.

Bei der in der DE 41 41 061 A1 beschriebenen Ausgestaltung ist die Wärmekraftmaschine von dem Moment an aktiv, sobald ausreichend Wärmeenergie im Abgas vorhanden ist, die das Arbeitsmittel verdampfen lässt. Dies bedeutet im praktischen Fahrzeugbetrieb, dass die Wärmekraftmaschine die Brennkraftmaschine ausschließlich dann unterstützen kann, wenn diese selbst einen hohen Abgaswärmeverlust aufweist, d. h. mit relativ hoher Last bzw. Leistung, oder Volllast betrieben wird.

Aufgabe der vorliegenden Erfindung ist es, einen Wärmetauscher aufzuzeigen, mit dem der Wirkungsgrad des Gesamtsystems Wärmekraftmaschine-Brennkraftmaschine, insbesondere im unteren und im mittleren Teillastbetrieb verbessert wird.

Diese Aufgabe wird durch das Merkmal im kennzeichnenden Teil des Patentanspruchs 1 gelöst.
Mit dem Wärmeerzeuger kann bei geringem Wärmeeintrag durch das Abgas in das Heißgasrohr die fehlende Wärmeenergie zur Verdampfung des Arbeitsmittels eingebracht werden. Durch diese Maßnahme ist es möglich, bedarfsgerecht Wärmeenergie zum Verdampfen des Arbeitsmittels bereitzustellen. Die Steuerung des Wärmeeintrags durch den Wärmeerzeuger in Abhängigkeit von der Wärmeenergie, die von dem Heißgasrohr abgegeben wird, kann durch Zu- und Abschalten bzw. Leistungsmodulation des Wärmeerzeugers erreicht werden. In vorteilhafter Weise wird durch diese Maßnahme Brennstoff eingespart, da im Teillastbetrieb der Brennkraftmaschine die maximale Abgastemperatur nicht ausreicht, um Dampf ausreichend hoch, d. h. bis auf Temperaturen von bis zu 650°C zu überhitzen. Bei dieser Temperatur weist die Wärmekraftmaschine einen besseren Wirkungsgrad als bei niedriger Temperatur auf. Entsprechend dem erzielten Wirkungsgrad der Wärmekraftmaschine kann die Menge Brennstoff für die Brennkraftmaschine reduziert werden. Eine geringe Menge Brennstoff ist ausreichend, mit Hilfe des Wärmeerzeugers eine Überhitzung auf die gewünschte Temperatur zu bewirken. Der Wärmeerzeuger wird nur zugeschaltet, wenn die gewünschte Temperatur durch das Abgas alleine nicht erreicht wird. In der Gesamtsumme ergibt sich eine Brennstoffeinsparung. Somit führt die erfindungsgemäße Ausgestaltung des Wärmetauschers direkt zu einer Verbesserung des Gesamtwirkungsgrades von Wärmekraftmaschine und Brennkraftmaschine.

Die Ausgestaltung gemäß Patentanspruch 2 ergibt den bestmöglichen Wärmeenergieübergang vom Heißgasrohr in das Rohr, das von dem Arbeitsmittel durchströmt ist, da das Abgas und das Arbeitsmittel nicht durch eine weitere isolierende Wandung voneinander getrennt sind. Auch der Wärmeenergieübergang von dem Hohlraum, der von Heißgas durchströmt wird, auf das Arbeitsmittel in dem Rohr ist durch keine zusätzliche Wand behindert. Durch diese Maßnahme wird der Wirkungsgrad des Wärmetauschers verbessert.

Gemäß der Patentansprüche 3 und 4 kann das Rohr in unterschiedlichen Ausgestaltungen einen Abschnitt des Heißgasrohres ersetzen. Eine Möglichkeit besteht gemäß Patentanspruch 3 darin, ein Rohr spiralförmig in der Umfangsform des Heißgasrohres zu wickeln und das Heißgasrohr in diesem Abschnitt durch die in radialer Richtung gasdichte verbundene Rohrspirale zu ersetzen. Eine zweite Möglichkeit gemäß Patentanspruch 4 besteht darin, mehrere Rohre parallel zueinander anzuordnen und in der Umfangsform des Heißgasrohres zu biegen und wie zuvor, diesen Abschnitt durch die ebenfalls in radialer Richtung gasdicht verbundenen Rohre zu ersetzen. Die Ausgestaltung gem. Patentanspruch 4 weist den besseren Wirkungsgrad auf, ist jedoch in der Herstellung etwas teurer.

Die parallel angeordneten Rohre können gemäß Patentanspruch 5 mit einer gemeinsamen Arbeitsmittelzuführleitung mit Arbeitsmittel gespeist, bzw. das verdampfte oder überhitzte Arbeitsmittel kann mit einer gemeinsamen Arbeitsmittelabführleitung abgeführt werden. Ein besonders einfacher und kompakter Aufbau lässt sich gemäß Patentanspruch 6 dadurch erzielen, dass die Arbeitsmittelzuführleitung und die Arbeitsmittelabführleitung benachbart zueinander angeordnet sind. Vorzugsweise sind diese in einem gemeinsamen Gehäuse, wie beispielsweise in einer längsgeteilten Leitung, benachbart angeordnet. Für einen guten Wirkungsgrad sollte die Flussrichtung des Arbeitsmittels in vorteilhafter Weise im Gegenstromprinzip, d. h. entgegen der Strömungsrichtung des Heißgases im Heißgasrohr, bzw. wie später beschrieben, bei modular zusammengesetzten Wärmetauschern im Kreuzstromprinzip geführt sein.

Mit den Ausgestaltungsvarianten gemäß der Patentansprüche 7 bis 9 werden in vorteilhafter Weise durch eine Oberflächenvergrößerung optimale Wärmeübergänge für einen guten Wirkungsgrad des Wärmetauschers erzielt. In weiteren Ausführungsvarianten können auch mehrere Wärmeübertragungselemente bzw. Rippen in dem vom Arbeitsmittel umströmten Abschnitt angeordnet sein. Die Anzahl der Wärmeübertragungselemente richtet sich unter anderem nach den zu erwartenden Temperaturdifferenzen zwischen dem Heißgas, dem Arbeitsmittel, der Temperatur im Hohlraum und der benötigten Wärmeenergiemenge, sowie den Stömungsverhältnissen.

Gemäß Patentanspruch 10 definiert die Länge des Hüllrohres, die meist gleich der Länge des umwickelten Abschnittes ist, die Baulänge des Wärmetauschers. Hierdurch ist gemäß Patentanspruch 11 die Aneinanderreihung mehrerer Wärmetauscher in Serienanordnung möglich. Durch diesen Aufbau kann in vorteilhafter Weise die Gesamtanzahl von eingesetzten Wärmetauschern in einfacher Weise an den zum Verdampfen oder Überhitzen des Arbeitsmittels benötigten Gesamtwärmeenergiebedarf angepasst werden.

Der für jeden Wärmetauscher gleiche Aufbau gemäß Patentanspruch 12 erlaubt den modularen Aufbau in Serienanordnung und erleichtert somit die Anpassung der Gesamtzahl von Wärmetauschern an den benötigten Gesamtwärmeenergiebedarf. Um eine voll funktionsfähige kompakte Einheit für modular gebaute Wärmetauscher zu erhalten, sind gemäß Patentanspruch 13 und 14 die Arbeitsmittelabführleitung eines ersten Wärmetauschers und die Arbeitsmittelzuführleitung eines zweiten Wärmetauschers arbeitsmittelführend und die Hohlräume der zwei Wärmetauscher gasführend miteinander verbindbar. Wie für einen einzelnen Wärmetauscher wird auch für einen modular aufgebauten Wärmetauscher das vorzugsweise Kreuzstromprinzip oder das Gegenstromprinzip für einen guten Wirkungsgrad verwendet.

Gemäß Patentanspruch 15 ist das Arbeitsmittel beim Eintritt in die Arbeitsmittelzuführleitung entweder flüssig oder dampfförmig. Somit ist der Aggregatszustand des Arbeitsmittels bei Eintritt in den Wärmetauscher unbedeutend. Das flüssige Arbeitsmittel wird im Wärmtauscher problemlos verdampft und das dampfförmige Arbeitsmittel wird, ohne Konstruktionsänderungen am Wärmetauscher, überhitzt.

Der vorgeschlagene Wärmetauscher eignet sich gemäß Patentanspruch 16 insbesondere für den Einsatz in einem Rankine-Prozess, in dem die im Abgas enthaltene Wärmeenergie zum Überhitzen eines Arbeitsmittels benutzt wird, um den Gesamtwirkungsgrad einer Brennkraftmaschine zu verbessern.

Gemäß Patentanspruch 17 kann der Wärmeerzeuger ein kontinuierliches, schaltbares oder modulierbares Verbrennungssystem, z. B. ein Porenbrenner sein. Dieser Brenner zeichnet sich durch einen sehr hohen Wirkungsgrad aus und ist auch als Zero-Emission-Brenner, d. h. als nahezu schadstofffreier Brenner, erhältlich. Die Umwelt wird somit nicht durch zusätzliche Schadstoffe belastet.

Die Anordnung des Wärmeerzeugers direkt an dem Wärmetauscher gemäß Patentanspruch 18 erlaubt die Nutzung von Strahlungsenergie des Wärmeerzeugers zur Aufheizung bzw. Verdampfung und/oder Überhitzung des Arbeitsmittels.

Durch die gasführende Verbindung des Hohlraumes mit dem Heißgasrohr gemäß Patentanspruch 19 kann in einfacher Weise das Abgas des Wärmeerzeugers durch das Heißgasrohr, bzw. den Abgasstrang der Brennkraftmaschine, abgeführt werden. Für einen Zero-Emission-Brenner ist hierbei keine zusätzliche katalytische Nachbehandlung des Abgases notwendig. Somit kann die Einleitung des Brennerabgases nach einer Katalysatoranordnung erfolgen, wodurch die Regelung der Abgasnachbehandlung der Brennkraftmaschine nicht beeinträchtigt wird.

Als Arbeitsmittel kann nach Patentanspruch 20 Wasser verwendet werden. Das Arbeitsmittel ist im Fall einer Leckage sowohl für die Umwelt als auch den Menschen unschädlich.

Der oder die Wärmetauscher, falls mehrere in Serienanordnung verwendet werden, können an unterschiedlichen Stellen des Heißgasrohres, bzw. Abgasstranges angeordnet werden. Hierzu bieten sich gemäß Patentanspruch 21 der Bereich zwischen der Brennkraftmaschine und dem Abgaskrümmer und/oder dem Abgaskrümmer und einem Vorkatalysator und/oder zwischen dem Vorkatalysator und dem Hauptkatalysator an. Der optimale Anbindungsort hängt jeweils von der benötigten Wärmeenergiemenge ab, die zur Verdampfung bzw. Überhitzung des Arbeitsmittels benötigt wird. Der höchste Wärmeeintrag erfolgt nahe an der Brennkraftmaschine.

Im Folgenden ist die Erfindung anhand eines bevorzugten Ausführungsbeispieles in einer einzigen Figur näher erläutert.

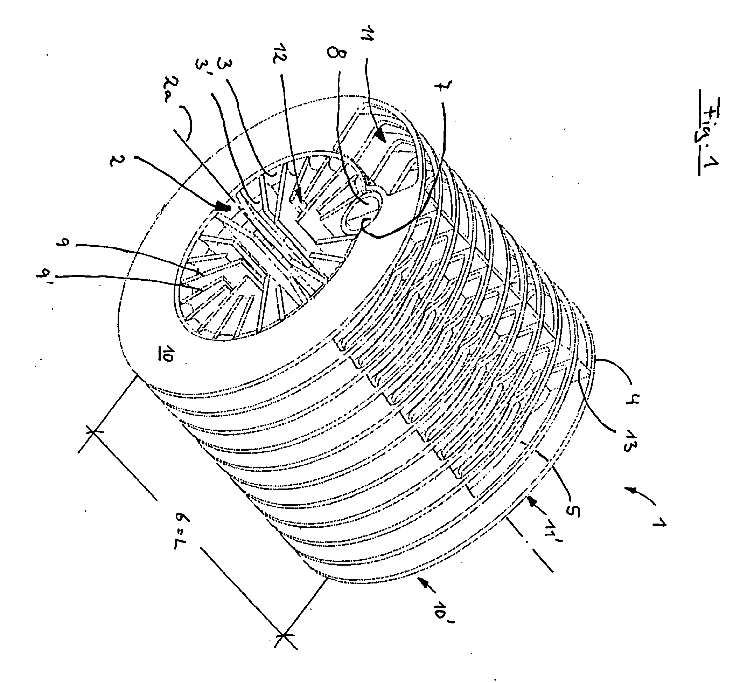

- Fig. 1: zeigt eine dreidimensionale Aufsicht auf einen erfindungsgemäßen Wärmetauscher.

Der Wärmetauscher 1 ist im Wesentlichen aus einem Heißgasrohr 2 mit einer Achse 2a und mit einem umwickelten Abschnitt 6, der koaxial außen von einem Hüllrohr 4 ummantelt ist, aufgebaut. Damit der strukturelle Aufbau des Wärmetauschers 1 erkennbar wird, ist das Hüllrohr 4 als Gitterstruktur dargestellt. Zwischen dem Hüllrohr 4 und dem Abschnitt 6 ist ein ringspaltförmiger Hohlraum 5 ausgebildet. Der Hohlraum 5 ist in beiden Richtungen der Achse 2a durch eine erste und eine zweite Abschlusswand 10, 10' begrenzt. Die Abschlusswände 10, 10' erstrecken sich vom Heißgasrohr 2 radial nach außen bis zum Hüllrohr 4. Die axiale Länge des Hüllrohrs 4 definiert eine Länge L des Wärmetauschers 1. Der Abschnitt 6, der von benachbarten, gasdicht miteinander verbundenen Rohren 3, 3' gebildet ist, entspricht weitgehend der Länge L, kann aber auch kürzer sein. Die Rohre 3, 3' erstrecken sich entsprechend einer Umfangsquerschnittsform des Heißgasrohres 2, hier ringförmig. Die benachbarten Rohre 3, 3' sind in Richtung der Achse 2a miteinander, sowie an den Übergängen zum Heißgasrohr 2 in radialer Richtung gasdicht verbunden und weisen zwischen einem Rohranfang und Rohrende einen Spalt auf. In diesem Spalt sind eine Arbeitsmittelzuführleitung 7 sowie eine Arbeitsmittelabführleitung 8 angeordnet. Jedes Rohr 3, 3' ist sowohl mit der Arbeitsmittelzuführleitung 7 als auch mit der Arbeitsmittelabführleitung 8 gasführend verbunden. Die Arbeitsmittelzuführleitung 7 und die Arbeitsmittelabführleitung 8 werden im vorliegenden Ausführungsbeispiel durch ein in Richtung der Achse 2a unterteiltes Rohr gebildet. Im Heißgasrohr 2 erstrecken sich radial nach innen im vorliegenden Ausführungsbeispiel 14 Wärmeübertragungselemente 9, 9', die als Kühl-, bzw. Heizrippen dienen. Die Wärmeübertragungselemente 9, 9' verbessern den Wärmeübergang im Abschnitt 6 vom Heißgas auf das Arbeitsmittel in den Rohren 3, 3'.

Nicht in Fig. 1 dargestellt ist ein erfindungsgemäß an den Wärmetauscher 1 angeordneter Wärmeerzeuger, ein kontinuierliches, schaltbares oder modulierbares Verbrennungssystem, beispielsweise ein Porenbrenner, der gasführend mit dem Hohlraum 5 verbunden ist, um die erzeugte Wärmeenergie in den Hohlraum 5 einzubringen. Die erste Abschlusswand 10 weist eine erste Öffnung 11 auf, durch die ein vom Wärmeerzeuger erzeugtes Heißgas in den Hohlraum 5 gefördert werden kann. Zum Austritt des abgekühlten Heißgases aus dem Wärmetauscher 1 weist die zweite Abschlusswand 10' eine zweite Öffnung 11' auf. Damit das vom Wärmeerzeuger erzeugte Heißgas im Gegenstromprinzip durch den Wärmetauscher 1 geleitet wird, erstreckt sich eine Trennwand 13 entlang der Arbeitsmittelzuführleitung 7 und der Arbeitsmittelabführleitung 8 radial nach außen bis zum Hüllrohr 4, an dem sie gasdicht befestigt ist. Die Öffnungen 11, 11' sind jeweils auf verschiedenen Seiten der Trennwand 13 angeordnet.

Damit der Wärmetauscher 1 einen sehr guten Wirkungsgrad aufweist, strömen die den Wärmetauscher 1 durchströmenden, zueinander benachbarten Medien, d. h. Heißgas im Heißgasrohr und Arbeitsmittel bzw. Arbeitsmittel und Heißgas im Hohlraum 5, im Gegenstromprinzip. In Ausnahmefällen kann von diesem Prinzip, unter Inkaufnahme eines Wirkungsgradverlustes abgewichen werden. Hierfür wird die Strömungsrichtung des Heißgases im Heißgasrohr 2 oder des Arbeitsmittels oder des Heißgases im Hohlraum 5 umgekehrt. Um das Gegenstromprinzip problemlos zu ermöglichen, ist die Arbeitsmittelzuführleitung 7 benachbart zur zweiten Öffnung 11' und die Arbeitsmittelabführleitung 8 benachbart zur ersten Öffnung 11 offen und die Arbeitsmittelabführleitung 8, eine Heißgaseintrittsöffnung 12 sowie die erste Öffnung 11 liegen in Richtung der Achse 2a auf derselben Seite des Wärmetauschers 1.

Der Wärmetauscher 1 ist modular aufgebaut, damit er mit zumindest einem zweiten baugleichen Wärmetauscher 1 in Richtung der Achse 2a miteinander verbunden werden kann. Hierfür sind die Arbeitsmittelabführleitung 8 des ersten Wärmetauschers und die Arbeitsmittelzuführleitung 7 des zweiten Wärmetauschers arbeitsmittelführend miteinander verbindbar. Ferner ist der Hohlraum 5 des ersten Wärmetauschers mit einem Hohlraum des zweiten Wärmetauschers gasführend verbindbar. Durch die modulare Ausgestaltung des Wärmetauschers 1 sind entsprechend dem geforderten Wärmeenergieübergang beliebig große, bzw. lange Wärmetauscher 1 realisierbar.

Aufgrund der modularen Bauweise kann die Größe des benötigten Wärmetauschers 1 in vorteilhafter Weise fallspezifisch ideal an den benötigten Wärmeenergiebedarf angepasst werden. Neben Wasser als Arbeitsmittel sind auch Flüssigkeiten, wie z. B. Kältemittel aus Kühl- oder Klimaanlagen, oder andere Arbeitsmittel wie auch Alkohole einsetzbar. Der Wärmetauscher 1 ist derart konzipiert, dass das Arbeitsmittel sowohl flüssig als auch dampfförmig in den Wärmetauscher eintreten kann um anschließend und/ oder überhitzt zu werden. Als Wärmeerzeuger kommt ein kontinuierliches Verbrennungssystem, hier ein Porenbrenner zum Einsatz, der als Zero-Emission-Brenner ausgelegt ist. Die Wärmebedarfsregelung kann hierbei durch An- und Ausschalten des Wärmeerzeugers bzw. durch Leistungsmodulation des Wärmeerzeugers geregelt bzw. gesteuert werden. Die Regelung kann auch durch Regelung des Dampfmassenstroms von dem zu überhitzenden Arbeitsmittel erfolgen. Auf diese Weise kann auch die Wärmeenergieabfuhr geregelt werden.

In weiteren Ausgestaltungsvarianten kann der Wärmeerzeuger direkt an den Wärmetauscher 1 angeordnet werden, so dass auch dessen Strahlungswärme zum Aufheizen des Arbeitsmittels dient. Der Wärmeerzeuger kann wahlweise koaxial um das Heißgasrohr 2 oder parallel daneben oder tangential zu dem Hohlraum 5 angeordnet werden. Bei Verwendung eines Zero-Emission-Brenners kann das Brennerabgas nach Durchströmen des Wärmetauschers 1 ohne eine Schadstoff-Nachbehandlung an die Umgebung oder in das Heißgasrohr 2, beispielsweise nach einem Hauptkatalysator geleitet werden. Die räumliche Lage des Wärmetauschers 1 kann zwischen der Brennkraftmaschine und einem Abgaskrümmer, zwischen dem Abgaskrümmer und einem Vorkatalysator oder zwischen einem Vorkatalysator und einem Hauptkatalysator liegen. Auch die Anordnung mehrerer Wärmetauscher 1 an unterschiedlichen zuvor genannten Orten ist möglich. Da in dem Wärmetauscher 1 keine Verschleißteile eingebracht sind, ist mit einer sehr hohen Lebensdauer zu rechnen.

In anderen Ausgestaltungsvarianten kann der Querschnitt des Heißgasrohres 2 auch andere Formen annehmen, beispielsweise oval oder rechteckig. Anstelle mehrerer parallel zueinander angeordneter Rohre 3, 3' kann eine Rohrwendel eingesetzt werden die in Richtung der Achse 2a durchgehend gasdicht ist, wobei bei dieser Ausgestaltung die Arbeitsmittelzuführleitung 7 sowie die parallel angeordnete Arbeitsmittelabführleitung 8 entfällt. Auch das Hüllrohr 4 kann einen vom kreisförmigen Querschnitt abweichenden Querschnitt, z. B. einen ovalen, rechteckigen oder einen an die baulichen Gegebenheiten angepassten, oder in Richtung der Achse 2a veränderlichen Querschnitt aufweisen. Darüber hinaus kann die Größe und Form sowie die Anzahl der Wärmeüberübertragungselemente 9, 9' variieren.

Die Arbeitsmittelzuführ- und die Arbeitsmittelabführleitung (7, 8) können abweichend von dem bevorzugten Ausführungsbeispiel auch getrennt voneinander, d. h. im Extremfall diametral zueinander, angeordnet werden.

### Bezugszeichenliste

- 1: Wärmetauscher
- 2: Heißgasrohr
- 2a: Heißgasrohrachse
- 3, 3': Rohr
- 4: Hüllrohr
- 5: Hohlraum
- 6: Abschnitt
- 7: Arbeitsmittelzuführleitung
- 8: Arbeitsmittelabführleitung
- 9, 9': Wärmeübertragungselement
- 10: erste Abschlusswand
- 10': zweite Abschlusswand
- 11: Erste Öffnung
- 11': Zweite Öffnung
- 12: Heißgaseintrittsöffnung
- 13: Trennwand

## Patentansprüche

1. Wärmetauschersystem bestehen aus einem Wärmetauscher und einem Wärmeerzeuger, wobei der Wärmetauscher (1) für eine Wärmekraftmaschine, die Heißdampf eines Arbeitsmittels mittels einer Entspannungseinrichtung in Bewegungsenergie umwandelt, zumindest aus einem Heißgasrohr (2) besteht, von dem ein Abschnitt (6) von einem Rohr (3), das von dem Arbeitsmittel durchströmt ist, umwickelt ist und einem Hüllrohr (4), das den Abschnitt (6) umhüllt und mit diesem einen Hohlraum (5) bildet, wobei der Hohlraum (5) gasführend mit dem Wärmeerzeuger verbunden ist und von diesem aufheizbar ist.

2. Wärmetauschersystem nach Patentanspruch 1,
**dadurch gekennzeichnet, dass** der Abschnitt (6) von dem Rohr (3) gebildet ist.

3. Wärmetauschersystem nach Patentanspruch 2,
**dadurch gekennzeichnet, dass** das Rohr (3) spiralförmig um eine Heißgasrohrachse (2a) gewickelt ist.

4. Wärmetauschersystem nach Patentanspruch 2,
**dadurch gekennzeichnet, dass** der Abschnitt (6) von zumindest zwei parallel zueinander angeordneten Rohren (3, 3'), die in Richtung der Heißgasrohrachse (2a) miteinander gasdicht verbunden sind, gebildet ist.

5. Wärmetauschersystem nach Patentanspruch 4,
**dadurch gekennzeichnet, dass** die Rohre (3, 3') eine gemeinsame Arbeitsmittelzuführleitung (7) und/oder eine gemeinsame Arbeitsmittelabführleitung (8) aufweisen.

6. Wärmetauschersystem nach Patentanspruch 5,
**dadurch gekennzeichnet, dass** die Arbeitsmittelzuführleitung (7) und die Arbeitsmittelabführleitung (8) benachbart zueinander angeordnet sind.

7. Wärmetauschersystem nach einem der Patentansprüche 1 bis 6,
**dadurch gekennzeichnet, dass** der Hohlraum (5) ein Ringspalt ist.

8. Wärmetauschersystem nach einem der zuvor genannten Patentansprüche,
**dadurch gekennzeichnet, dass** der Abschnitt (6) zumindest ein radial nach innen weisendes Wärmeübertragungselement (9) aufweist.

9. Wärmetauschersystem nach Patentanspruch 8,
**dadurch gekennzeichnet, dass** das Wärmeübertragungselement (9) eine in axialer Richtung des Heißgasrohres (2a) ausgerichtete Rippe ist.

10. Wärmetauschersystem nach einem der zuvor genannten Patentansprüche,
**dadurch gekennzeichnet, dass** von einer Länge (L) des Hüllrohres (4) eine Baulänge des Wärmetauschers (1) definiert ist.

11. Wärmetauschersystem nach Patentanspruch 10,
**dadurch gekennzeichnet, dass** zumindest ein erster und ein zweiter Wärmetauscher (1, 1') in axialer Richtung aneinanderreihbar sind.

12. Wärmetauschersystem nach Patentanspruch 11,
**dadurch gekennzeichnet, dass** der erste und der zweite Wärmetauscher (1, 1') im wesentlichen baugleich sind.

13. Wärmetauschersystem nach einem der Patentansprüche 11 oder 12,
**dadurch gekennzeichnet, dass** die Arbeitsmittelabführleitung (8) des ersten Wärmetauschers (1) und eine Arbeitsmittelzuführleitung (9') des zweiten Wärmetauschers (1') arbeitsmittelführend miteinander verbindbar sind.

14. Wärmetauschersystem nach einem der Patentansprüche 11 bis 13,
**dadurch gekennzeichnet, dass** der Hohlraum (5) des ersten Wärmetauschers (1) mit einem Hohlraum (5') des zweiten Wärmetauschers (1') gasführend verbindbar ist.

15. Wärmetauschersystem nach einem der zuvor genannten Patentansprüche,
**dadurch gekennzeichnet, dass** das Arbeitsmittel beim Eintritt in die Arbeitsmittelzuführleitung (7) flüssig und/oder dampfförmig ist.

16. Wärmetauschersystem nach einem der zuvor genannten Patentansprüche,
**dadurch gekennzeichnet, dass** das Heißgasrohr (2) ein Abgasrohr einer Brennkraftmaschine ist.

17. Wärmetauschersystem nach einem der zuvor genannten Patentansprüche,
**dadurch gekennzeichnet, dass** der Wärmeerzeuger ein kontinuierliches Verbrennungssystem, vorzugsweise ein Porenbrenner ist.

18. Wärmetauschersystem nach einem der zuvor genannten Patentansprüche,
**dadurch gekennzeichnet, dass** der Wärmeerzeuger direkt an dem Wärmetauscher (1) angeordnet ist.

19. Wärmetauschersystem nach einem der zuvor genannten Patentansprüche,
**dadurch gekennzeichnet, dass** das Arbeitsmittel Wasser ist.

20. Brennkraftmaschine mit einem Wärmetauschersystem nach einem der zuvor genannten Patentansprüche, wobei die Brennkraftmaschine einen Abgaskrümmer und einen Katalysator aufweist,
**dadurch gekennzeichnet, dass** der Wärmetauscher zwischen der Brennkraftmaschine und dem Abgaskrümmer und/oder zwischen dem Abgaskrümmer und einem Vorkatalysator und/oder zwischen dem Vorkatalysator und einem Hauptkatalysator angeordnet ist.

## Claims

1. A heat exchange system comprising a heat exchanger and a heat generator, wherein the heat exchanger (1), which is for a heat engine which, via an expansion device, converts superheated steam from a working medium into kinetic energy, comprises at least one hot gas pipe (2), a portion (6) of which is enveloped by a pipe (3) through which the working medium flows, and also comprises an enveloping pipe (4) which envelops the portion (6) and co-operates therewith to form a cavity (5), wherein the cavity (5) is connected for conveying gas to the heat generator and is heatable thereby.

2. A heat exchange system according to claim 1, **characterised in that** the portion (6) is in the form of the pipe (3).

3. A heat exchange system according to claim 2, **characterised in that** the pipe (3) is wound in a spiral around a hot gas pipe axis (2a).

4. A heat exchange system according to claim 2, **characterised in that** the portion (6) is made up of at least two parallel pipes (3, 3') connected to one another in gas-tight manner in the direction of the hot gas pipe axis (2a).

5. A heat exchange system according to claim 4, **characterised in that** the pipes (3, 3') have a common working medium supply pipe (7) and/or a common working medium discharge pipe (8).

6. A heat exchange system according to claim 5,
**characterised in that** the working medium supply pipe (7) and the working medium discharge pipe (8) are disposed near one another.

7. A heat exchange system according to any of claims 1 to 6,
**characterised in that** the cavity (5) is an annular gap.

8. A heat exchange system according to any of the previously-mentioned claims,
**characterised in that** the portion (6) has at least one radially inwardly pointing heat transfer element (9).

9. A heat exchange system according to claim 8,
**characterised in that** the heat transfer element (9) is a rib aligned in the axial direction of the hot gas pipe (2a).

10. A heat exchange system according to any of the previously-mentioned claims,
**characterised in that** an overall length of the heat exchanger (1) is defined by a length (L) of the enveloping pipe (4).

11. A heat exchange system according to claim 10,
**characterised in that** at least a first and a second heat exchanger (1, 1') can be aligned with one another in the axial direction.

12. A heat exchange system according to claim 11,
**characterised in that** the first and the second heat exchanger (1, 1') are substantially identical in construction.

13. A heat exchange system according to claim 11 or claim 12,
**characterised in that** the working medium discharge pipe (8) for the first heat exchanger (1) and a working medium supply pipe (9') for the second heat exchanger (1') are connectable together so as to convey working medium.

14. A heat exchange system according to any of claims 11 to 13,
**characterised in that** the cavity (5) in the first heat exchanger (1) is connectable to a cavity (5') in the second heat exchanger (1') so as to convey gas.

15. A heat exchange system according to any of the previously-mentioned claims,
**characterised in that** the working medium is in liquid and/or vapour form when it enters the working medium supply pipe (7).

16. A heat exchange system according to any of the previously-mentioned claims,
**characterised in that** the hot gas pipe (2) is an exhaust pipe of an internal combustion engine.

17. A heat exchange system according to any of the previously-mentioned claims,
**characterised in that** the heat generator is a continuous combustion system, preferably a porous burner.

18. A heat exchange system according to any of the previously-mentioned claims,
**characterised in that** the heat generator is disposed directly on the heat exchanger (1).

19. A heat exchange system according to any of the preceding claims,
**characterised in that** the working medium is water.

20. An internal combustion engine comprising a heat exchange system according to any of the previously-mentioned claims wherein the engine has an exhaust manifold and a catalytic converter,
**characterised in that** the heat exchanger is disposed between the engine and the exhaust manifold and/or between the exhaust manifold and a preconverter and/or between the preconverter and a main converter.

## Revendications

1. °) Système échangeur de chaleur composé d'un échangeur de chaleur et d'un générateur de chaleur dans lequel,
- l'échangeur de chaleur pour un moteur thermique transforme la vapeur chaude d'un fluide de travail par une installation de détente en énergie cinétique, est composé d'au moins un tube à gaz chaud (2) dont un segment (6) est formé par un tube (3) traversé par le fluide de travail, ce segment étant enroulé et enveloppé par un tube enveloppe (4) en formant une cavité (5) avec celui-ci,
système dans lequel
la cavité (5) communique avec le générateur de chaleur pour conduire les gaz qui le chauffent.

2. °) Système d'échangeur de chaleur selon la revendication 1,
**caractérisé en ce que**
le segment (6) est formé par le tube (3).

3. °) Système d'échangeur de chaleur selon la revendication 2,
**caractérisé en ce que**
le tube (3) est enroulé en hélice autour d'un axe de tube de gaz chaud (2a).

4. °) Système d'échangeur de chaleur selon la revendication 2,
**caractérisé en ce que**
le segment (6) est formé par au moins deux tubes (3, 3') parallèles l'un à l'autre et qui sont reliés de manière étanche l'un à l'autre dans la direction de l'axe du tube de gaz chaud (2a).

5. °) Système d'échangeur de chaleur selon la revendication 4,
**caractérisé en ce que**
les tubes (3, 3') ont une conduite commune d'alimentation en fluide de travail (7) et/ou une conduite commune de sortie de fluide de travail (8).

6. °) Système d'échangeur de chaleur selon la revendication 5,
**caractérisé en ce que**
la conduite d'alimentation en fluide de travail (7) et la conduite de sortie de fluide de travail (8) sont installées, voisines l'une de l'autre.

7. °) Système d'échangeur de chaleur selon l'une des revendications 1 à 6,
**caractérisé en ce que**
la cavité (5) est un intervalle annulaire.

8. °) Système d'échangeur de chaleur selon l'une des revendications précédentes,
**caractérisé en ce que**
le segment (6) comporte au moins un élément de transfert de chaleur (9) dirigé radialement vers l'intérieur.

9. °) Système d'échangeur de chaleur selon la revendication 8,
**caractérisé en ce que**
l'élément de transfert de chaleur (9) est une nervure dirigée dans la direction axiale de la veine de gaz chaud (2a).

10. °) Système d'échangeur de chaleur selon l'une des revendications précédentes,
**caractérisé en ce que**
la longueur de l'échangeur de chaleur (1) est définie par la longueur (L) du tube enveloppe (4).

11. °) Système d'échangeur de chaleur selon la revendication 10,
**caractérisé par**
au moins un premier et un second échangeur de chaleur (1,1') associés l'un à l'autre dans la direction axiale.

12. °) Système d'échangeur de chaleur selon la revendication 11,
**caractérisé en ce que**
le premier et le second échangeur de chaleur (1, 1') seront essentiellement de même construction.

13. °) Système d'échangeur de chaleur selon l'une des revendications 11 sou 12,
**caractérisé en ce que**
la conduite de fluide de travail (8) du premier échangeur de chaleur (1) et la conduite d'alimentation en fluide de travail (9') du second échangeur de chaleur (1') sont reliés de façon à communiquer pour le passage du fluide de travail.

14. °) Système d'échangeur de chaleur selon l'une des revendications 11 à 13,
**caractérisé en ce que**
la cavité (5) du premier échangeur de chaleur (1) est relié à la cavité (5') du second échangeur de chaleur (1') de façon à assurer le passage des gaz.

15. °) Système d'échangeur de chaleur selon l'une des revendications précédentes,
**caractérisé en ce qu'**
à l'entrée dans la conduite d'alimentation en un fluide de travail (7) le fluide de travail est à l'état liquide et/ou de vapeur.

16. °) Système d'échangeur de chaleur selon l'une des revendications précédentes,
**caractérisé en ce que**
le tube de gaz chaud (2) est un tube de gaz d'échappement d'un moteur thermique.

17. °) Système d'échangeur de chaleur selon l'une des revendications précédentes,
**caractérisé en ce que**
le générateur de chaleur est un système de combustion continu de préférence un brûleur à matière poreuse.

18. °) Système d'échangeur de chaleur selon l'une des revendications précédentes,
**caractérisé en ce que**
le générateur de chaleur est associé directement à l'échangeur de chaleur (1).

19. °) Système d'échangeur de chaleur selon l'une des revendications précédentes,
**caractérisé en ce que**
le fluide de travail est de l'eau.

20. °) Moteur thermique comportant un système d'échangeur de chaleur selon l'une des revendications précédentes dans lequel,
le moteur thermique comporte un collecteur de gaz d'échappement et un catalyseur,
moteur thermique **caractérisé en ce que**
l'échangeur de chaleur est installé entre le moteur thermique et le collecteur de gaz d'échappement et/ou entre le collecteur de gaz d'échappement et un catalyseur amont et/ou et un catalyseur principal.
